Europäisches Patentamt

European Patent Office

Office européen des brevets

(19)

(11) Numéro de publication: **0 241 372 B1**

## FASCICULE DE BREVET EUROPEEN

(12)

(45) Date de publication de fascicule du brevet:
28.08.91

(51) Int. Cl.⁵: **G11B 7/135**, G11B 7/08

(21) Numéro de dépôt: 87400773.5

(22) Date de dépôt: 07.04.87

(54) Dispositif de lecture optique de support d'enregistrement optique.

(30) Priorité: 11.04.86 FR 8605239

(43) Date de publication de la demande:
14.10.87 Bulletin 87/42

(45) Mention de la délivrance du brevet:
28.08.91 Bulletin 91/35

(84) Etats contractants désignés:
AT BE CH DE ES FR GB IT LI LU NL SE

(56) Documents cités:
EP-A- 0 147 749
EP-A- 0 219 908
DE-A- 3 522 849
FR-A- 2 538 580
GB-A- 2 059 057

PATENT ABSTRACTS OF JAPAN, vol. 9, no. 37 (P-335)[1760], 16 février 1985; & JP-A-59 177 734 (TOSHIBA K.K.) 08-10-1984

IBM TECHNICAL DISCLOSURE BULLETIN, vol. 22, no. 4, septembre 1979, page 1646, New York, US; M.R. LATTA et al.: "Multi-fonction holographic optical element for readout of high density recorded data"

PATENT ABSTRACTS OF JAPAN, vol. 7, no. 245 (P-233)[1390], 29 octobre 1983; & JP-A-58 130 448 (TOKYO SHIBAURA DENKI K.K.) 03-08-1983

(73) Titulaire: **THOMSON S.A.**
**51, Esplanade du Général de Gaulle**
**F-92800 Puteaux(FR)**

(72) Inventeur: **Lehureau, Jean-Claude**
**THOMSON-CSF SCPI 19, avenue de Messine**
**F-75008 Paris(FR)**
Inventeur: **Mourey, Bruno**
**THOMSON-CSF SCPI 19, avenue de Messine**
**F-75008 Paris(FR)**
Inventeur: **Magna, Henriette**
**THOMSON-CSF SCPI 19, avenue de Messine**
**F-75008 Paris(FR)**

(74) Mandataire: **Lepercque, Jean et al**
**THOMSON-CSF SCPI**
**F-92045 PARIS LA DEFENSE CEDEX 67(FR)**

## Description

L'invention concerne un dispositif de lecture optique de support d'enregistrement optique applicable notamment aux têtes optiques de lecture de disques optiques désignées dans le commerce par des expressions telles que compact discs, vidéodisques ou disques optiques numériques.

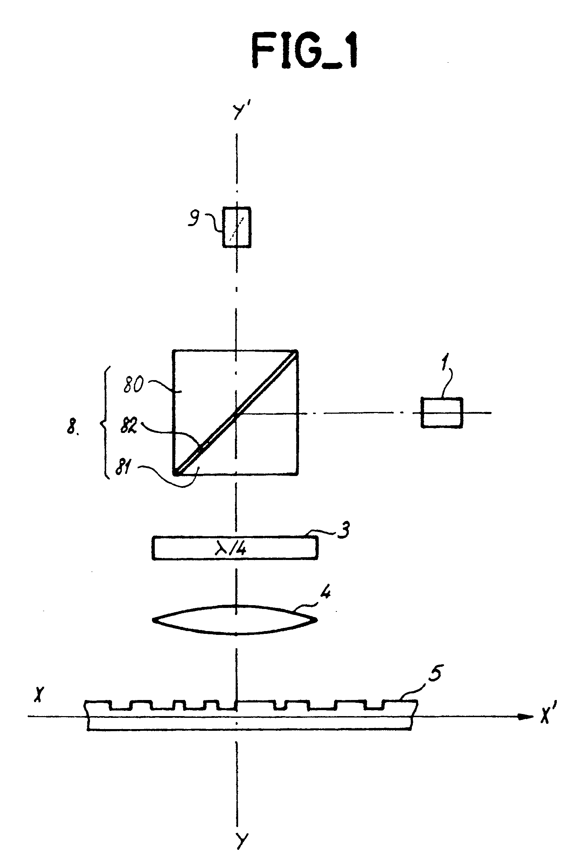

Un dispositif de lecture optique de disque de type connu comprend au moins, comme représenté figure 1:
- une source laser émettant un faisceau lumineux polarisé linéairement 1;
- un élément séparateur de polarisation 8 ;
- une lame quart d'onde 3 ;
- un objectif de focalisation 4 ;
- un ensemble de détecteurs de signal et d'erreurs de positionnement 9.

Suivant l'art connu, l'élément séparateur de polarisation est un cube de verre comportant dans son plan médian une superposition de couches minces diélectriques 82 assurant la réflexion d'une onde polarisée tangentiellement et la transmission d'une onde polarisée sagittalement.

La source laser 1 émet un faisceau lumineux dont la polarisation est telle que le faisceau est réfléchi, par le séparateur de polarisation, vers la lame quart d'onde 3. Le faisceau est alors transformé en faisceau à polarisation circulaire et est focalisé par la lentille 4 sur le disque 5. Selon l'information rencontrée sur le disque 5, le faisceau est réfléchi avec un décalage de phase. La lame quart d'onde 3 retransforme ensuite le faisceau à polarisation circulaire en faisceau à polarisation linéaire. Le faisceau obtenu est retransmis par la cube séparateur 8 à l'ensemble de détecteurs 9 qui peut être, sur la figure 1, un photodétecteur. La quantité de lumière détectée par le photodétecteur est fonction de l'importance de déphasage introduit par le disque 5 et dont de la quantité de lumière retransmise par le cube séparateur 8.

Un tel système présente différents inconvénients. Tout d'abord, le positionnement de l'ensemble de détecteurs 9 par rapport à la source 1 et le disque 5 au travers du cube séparateur 8 est difficile à réaliser. Ce positionnement impose des tolérances de quelques microns sur la position du cube séparateur.

De plus, un tel cube séparateur est coûteux.

Enfin, l'ensemble ainsi décrit est relativement encombrant.

Pour remédier à ces inconvénients on a déjà proposé (GB-A- 2 059 057, en particulier la figure 5) un dispositif de lecture optique comprenant une source laser émettant selon un axe déterminé un premier faisceau polarisé linéairement et de longueur d'onde déterminée; un séparateur de faisceaux sous forme d'un réseau de diffraction recevant le premier faisceau et le retransmettant sous la forme d'un deuxième faisceau; une lentille de focalisation qui focalise ce deuxième faisceau sous la forme d'un quatrième faisceau de lecture; un support d'enregistrement recevant le quatrième faisceau de lecture et le réfléchissant sous le forme d'un cinquième faisceau vers la lentille de focalisation, et le séparateur de faisceaux qui retransmet au moins un faisceau de détection; au moins un dispositif de détection recevant le faisceau de détection et fournissant au moins un signal électrique traduisant la détection réalisée; le séparateur de faisceaux induisant un effet d'astigmatisme sur le faisceau de détection.

L'effet d'astigmatisme est obtenu en faisant varier linéairement la période du réseau de traits rectilignes.

Un tel réseau à périodes variables est de réalisation complexe.

L'invention pallie à cet inconvénient.

Selon un de ses aspects elle est caractérisée en ce que le séparateur du dispositif de lecture optique est incliné par rapport à l'axe déterminé (l'axe de la source laser).

En variante le dispositif de détection est disposé sur un support incliné par rapport à l'axe déterminé.

Selon un autre de ses aspects l'invention est caractérisée en ce que le séparateur de faisceaux présente un réseau de phase qui comporte un réseau de sillons de forme elliptique.

En variante le réseau de phase présente une lame transparente d'un indice de réfraction différent du milieu environnant et portant un réseau de sillons de section triangulaire ayant la forme de dents de scie dont une arête est perpendiculaire au plan de la lame transparente, le produit de la hauteur $E$ de l'arête par la différence d'indice $n$ de la réfraction de la lame transparente par rapport au milieu environnant étant sensiblement égal à la longueur d'onde du faisceau lumineux.

Selon encore une autre variante le séparateur de faisceaux possède des moyens de réflexion et travaille en réflexion vis-à-vis des faisceaux qu'il reçoit.

L'invention permet également de simplifier la réalisation de la focalisation et du suivi radial. C'est pourquoi selon un autre aspect de l'invention, le dispositif de lecture optique de support d'enregistrement optique est caractérisé en ce que le dispositif de détection comporte, dans un même plan, des photodétecteurs permettant de régler la focalisation du faisceau de lecture sur le support et des photodétecteurs pour l'asservissement radial de l'axe déterminé par rapport à une piste d'informations du support et fonctionnant en mode push-pull.

Selon encore un autre aspect de l'invention, le séparateur de faisceaux est un séparateur par polarisation et il comporte un réseau de phase compris entre un premier milieu et un deuxième milieu dont l'un au moins est biréfringent, les indices des deux milieux étant égaux pour la polarisation linéaire du premier faisceau (le faisceau polarisé linéairement émis par la source laser).

Les différents objets et caractéristiques de l'invention apparaîtront plus clairement dans la description qui va suivre faite en se reportant aux figures annexées qui représentent :

- la figure 1, un dispositif optique de lecture selon l'art connu et décrit précédemment;
- la figure 2, un exemple de réalisation de dispositif optique de lecture selon l'invention;
- la figure 3, un exemple de réalisation d'un séparateur de faisceau par polarisation selon l'invention;
- la figure 4, une vue en plan d'un exemple de réalisation d'un séparateur de faisceau selon l'invention;
- la figure 5, un exemple de réalisation d'un photodétecteur adapté au dispositif de lecture selon l'invention;
- la figure 6, un exemple de dispositif de lecture selon l'invention;
- la figure 7, un exemple de réalisation de photodétecteurs et d'une diode laser adaptés au dispositif de lecture selon l'invention.

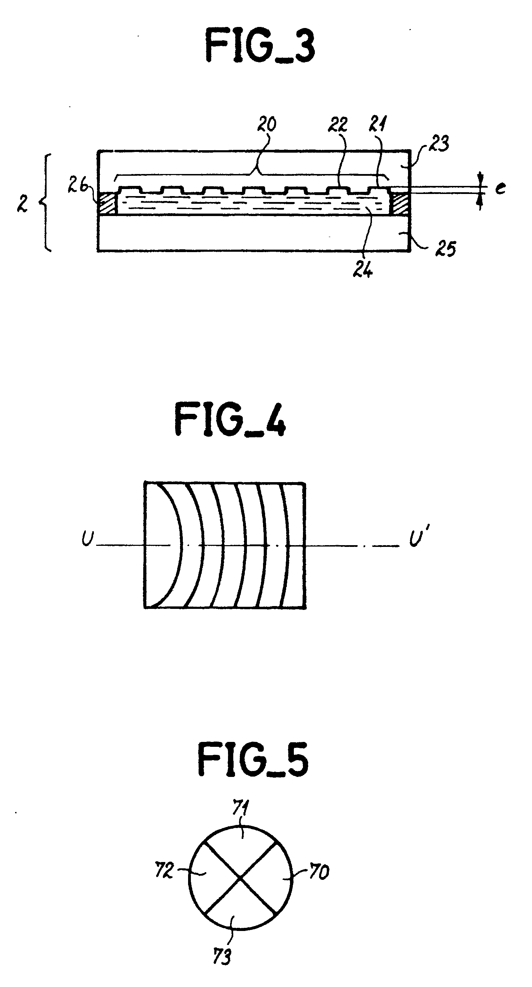

- la figure 3, un autre exemple de réalisation d'un dispositif optique de lecture selon l'invention;

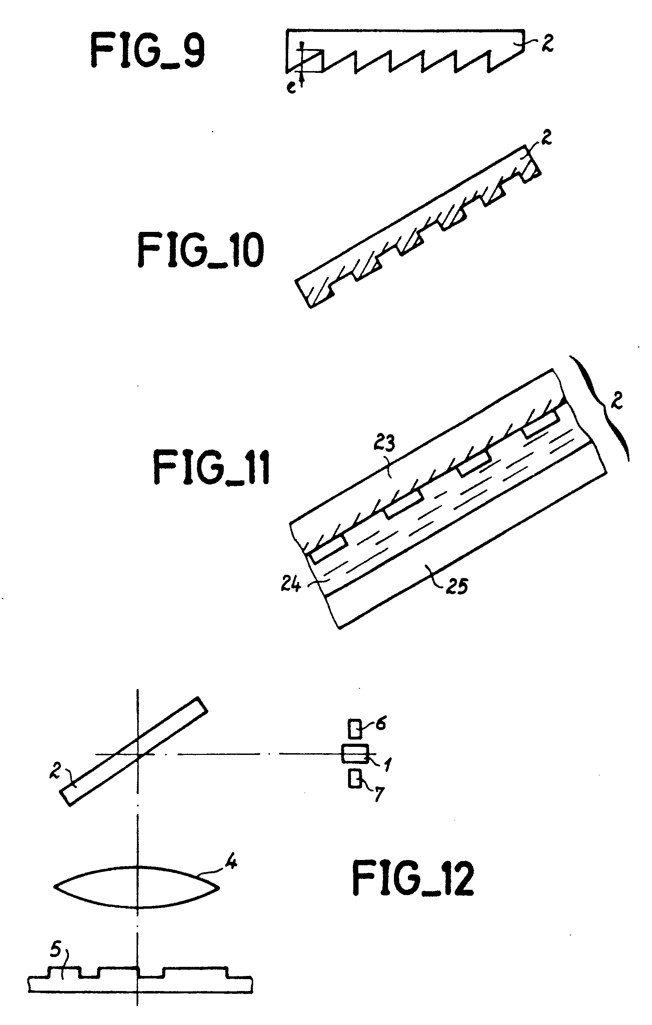

- les figures 9 et 10, des exemples de réalisations de séparateurs de faisceaux sans milieu biréfringent;
- la figure 11, un autre exemple de réalisation d'un séparateur de faisceau avec milieu biréfringent et possédant une surface réfléchissante;
- la figure 12, une variante de réalisation du détecteur optique selon l'invention.

La figure 1 concerne une tête optique de lecture selon l'art connu telle que décrite précédemment. Il apparaît que la position de la source laser 1 et son orientation par rapport au dispositif séparateur de faisceau 8, représenté sous forme d'un cube séparateur sont délicats à régler. De même, la position du photodétecteur 9 par rapport au faisceau réfléchi par le disque 5 et donc par rapport à l'ensemble constitué par la source laser 1, le cube séparateur 8 et le disque 5, doit être précise. Il s'ensuit que les réglages de positions étant réalisés, ils ne doivent plus être susceptibles de modifications dues par exemple à des raisons de dilatations thermiques. Le boîtier, non représenté sur la figure, qui contient les différents éléments de la figure 1, doit donc être en matériau pouvant être usiné avec une grande précision et ne présentant quasiment pas de dilatation ou de déformation sous l'effet de la variation de température. C'est pourquoi, le dispositif de la figure conduit à une tête de lecture de disque optique relativement onéreuse.

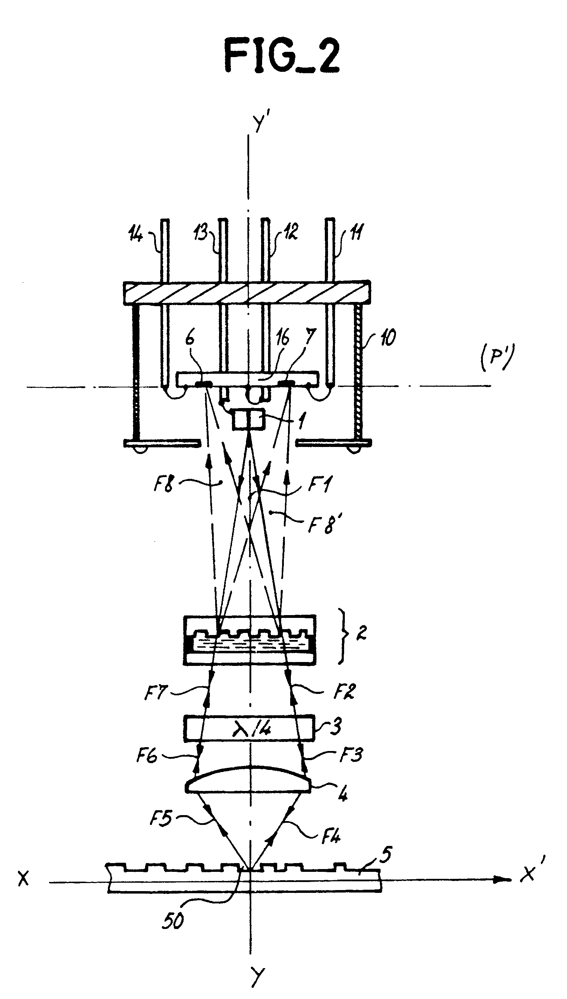

Selon l'invention, les différents éléments du dispositif optique de lecture représenté en figure 2 sont alignés selon un même axe YY' perpendiculaire au plan du support d'enregistrement ou disque optique 5.

Sur la figure 2, le dispositif optique de lecture et le disque 5 ont été représentés en coupe. Les informations du disque se déplacent selon un axe XX'. L'axe YY' du dispositif optique de lecture est perpendiculaire à l'axe XX'.

Le dispositif de lecture comporte :

- une source lumineuse telle qu'une source laser 1 placée sur l'axe YY' et émettant, selon cet axe YY' un faisceau F1 de lumière polarisée linéairement ;
- un séparateur 2 de faisceau par polarisation comportant un réseau de phase situé à l'interface de deux milieux dont l'un n'est pas biréfringent et l'autre est biréfringent. Ce séparateur de faisceau est placé perpendiculairement au faisceau F1. Il retransmet un faisceau F2 et n'influe pas sur la transmission en raison du type et de la direction de polarisation de la lumière. Par contre, comme cela sera décrit ultérieurement, le faisceau après réflexion par le disque optique pourra être l'objet d'une réfraction ;
- une lame quart d'onde 3 recevant le faisceau F2 à polarisation linéaire et retransmettant un faisceau F3 à polarisation circulaire ;
- une lentille 4 focalisant le faisceau F3 sous la forme d'un faisceau F4 de façon à projeter un faisceau de lecture sur le disque optique 5 ;
- le disque optique 5 dont les informations telles que 50 sont mobiles selon l'axe XX' et passent successivement sous le faisceau de lecture F4 ;
- des dispositifs de détection 6 et 7 situés dans un plan P' non conjugué du plan du disque, à proximité de la source laser 1, de part et d'autre de l'axe YY', alignés selon une direction parallèle à l'axe XX' c'est-à-dire parallèlement à la direction de déplacement des informations du disque 5.

Le séparateur 2 de faisceau est réalisé, par exemple, comme représenté en figure 3.

Il comporte une lame transparente 23, en verre par exemple, munie d'un réseau 20 de sillons tels que 21 et 22. Parallèlement à la lame 23 est située une lame 25 également transparente, en verre par exemple, déterminant avec la lame 23 un espace qui est rempli d'un matériau biréfringent 24 tel qu'un cristal liquide. Un joint d'étanchéité 26 maintient le cristal liquide entre les deux lames.

L'indice de réfraction du milieu constituant la lame 23 étant $n_o$, le matériau biréfringent 24 est choisi de telle façon que pour la polarisation du faisceau F2 qu'il reçoit, son indice de réfraction soit également $n_o$.

Par contre, pour la polarisation du faisceau F7 réfléchi par le disque optique 5, l'indice $n_o$ du milieu constituant la lame 23 et l'indice $n_e$ constituant le milieu biréfringent sont différents. La profondeur de gravure du réseau est préférentiellement telle que l'ordre 0 de diffraction du faisceau F7 soit annulée. C'est-à-dire, si :

e = est la profondeur de gravure

$\Delta n$ = l'écart d'indice entre les indices $n_o$ et $n_e$

$\lambda$ = la longueur d'onde du faisceau lumineux émis par la source laser 1,

on a :

$$e \times \Delta n = \lambda/2.$$

Un mode de réalisation du séparateur de faisceau 2 consiste à former un réseau par pressage ou photogravure d'un verre ou polymère d'indice typique $n_o$ = 1,5. Ce verre est utilisé pour fermer la cellule à cristal liquide dont l'axe d'orientation des molécules est parallèle aux stries du réseau.

On pourra utiliser par exemple, pour le cristal liquide, un mélange eutectique tel que celui connu sous la dénomination commerciale E7 et fabriqué par la Société BDH Chemicals Ltd (United Kingdom). L'indice ordinaire de ce cristal liquide est sensiblement égal à $n_o$ = 1,5. Son indice de réfraction $n_e$ de biréfringence est d'environ 1,725. Soit un écart d'indice entre les deux milieux 23 et 24 de 0,225.

Ainsi, compte tenu d'une longueur d'onde de fonctionnement de 0,8 μm la profondeur e des sillons 21,22 du réseau 20 doit être choisie égale à 1,77 μm. Le pas des sillons est typiquement égal à 10 μm.

L'orientation des molécules parallèlement aux lames de verre est obtenue par un traitement classique du type polymère frotté.

Le cristal liquide peut être remplacé par tout autre matériau biréfringent (e.g. polymère orienté, ou polymère présentant une phase cristal liquide à haute température). Dans ce dernier cas, l'orientation des chaines de polymères, parallèlement aux gravures, serait obtenue par passage dans la phase nématique à haute température, cette orientation se conservant lors du refroidissement en phase polymère.

Les photodétecteurs 6 et 7 sont intégrés sur le même ensemble ou puce 16 réalisé préférentiellement en silicium. Cette puce 16 en silicium peut comprendre un détecteur central non représenté sur la figure pour réguler la puissance émise par la source laser. Les photodétecteurs 6 et 7 ont pour rôle de détecter les erreurs de positionnement radiale et verticale et de lire le signal porté par le disque.

La puce 16 et la source 1 peuvent être assemblés dans le même boîtier et pré-positionnés l'un par rapport à l'autre. La lentille 4 peut être mûe séparément ou solidairement du reste du montage pour suivre les erreurs radiale et verticale.

La source laser 1 et les éléments de la puce 16 tels que les photodétecteurs 6 et 7 sont raccordés par des connexions électriques 11, 12, 13, 14 à des circuits extérieurs non représentés.

Le fonctionnement du dispositif de lecture optique ainsi décrit est tel qu'un faisceau de lecture F4 est réfléchi par le disque 5 sous forme d'un faisceau F5. En l'absence d'information sur le disque 5, le faisceau F5 donne lieu après transmission par la lentille 4, la lame quart d'onde 3 et le séparateur 2, à deux faisceaux diffractés F8 et F8' symétriques par rapport à l'axe YY' et de même intensité. Ces faisceaux atteignent la puce 16 à l'emplacement des détecteurs 6 et 7 qui détectent une certaine quantité de lumière.

Si le faisceau F4 atteint le disque 5 à l'emplacement d'un signal d'information, le faisceau subit un déphasage de sa polarisation. Ceci se traduit par une diffraction différente par le séparateur de polarisation 2. Une partie de la lumière des faisceaux F8 et F8' n'atteint pas les photodétecteurs 6 et 7. Ceux-ci détectent alors moins de lumière.

Selon un premier exemple de réalisation, les sillons 21 et 22 du réseau 20 sont rectilignes et parallèles.

Cependant, il est possible de les prévoir de forme elliptique de façon à introduire un astigmatisme. Le réseau a alors une configuration telle que représentée en figure 4 avec des portions d'ellipses concentriques dont l'un des axes est UU'.

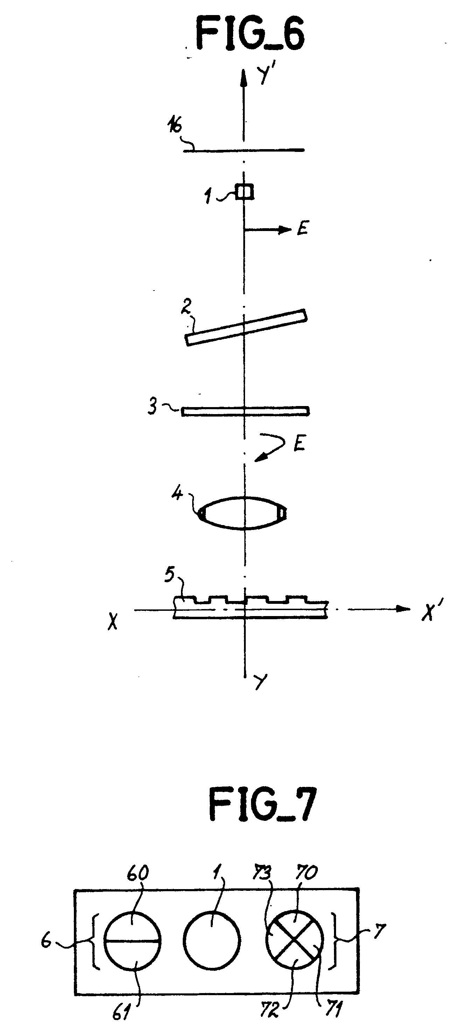

En liaison avec ce réseau elliptique, l'un des photodétecteurs, 7 par exemple, comprend quatre photodétecteurs 70, 71, 72, 73 disposés en croix dans le plan P' comme cela est représenté sur la figure 5.

Si le disque 5 se trouve à une distance correcte de la lentille 4, le faisceau diffracté F8' atteint les photodétecteurs 70, 71, 72 et 73 sous forme d'un cercle et éclaire de façon équivalente chaque détecteur.

Si la distance du disque 5 par rapport à la lentille 4 diffère par rapport au cas précédent, ou si la lentille 4 est déplacée selon l'axe YY', le faisceau F8' projette alors sur les photodétecteurs 70 à 73 une image de forme elliptique dont l'un des axes sera parallèle à l'axe UU'. Par exemple, si la lentille 4 est trop près du disque 5, le grand axe de l'image elliptique sur les photodétecteurs 70 à 73 sera parallèle à l'axe UU' et deux photodétecteurs, 70 et 72 par exemple, recevrait plus de lumière que les deux autres photodétecteurs 71 et 73. A l'inverse, si la lentille est trop éloignée du disque 5, le grand axe de l'image sur les photodétecteurs sera perpendiculaire à l'axe UU' et ce sont les deux photodétecteurs 71 et 73 qui recevront plus de lumière que les photodétecteurs 70 et 72.

L'astigmatisme du réseau 20 peut être augmenté en inclinant le séparateur 2 par rapport à l'axe YY'.

On peut également prévoir un réseau 20 dont les sillons sont circulaires et concentriques. On incline alors le séparateur 2 par rapport à l'axe YY' pour donner, au réseau 20 de forme circulaire un effet d'astigmatisme.

Une telle inclinaison du séparateur 2 est représentée sur la figure 6.

Il est également possible, pour introduire un astigmatisme, d'incliner la puce 16 portant les photodétecteurs par rapport à l'axe YY'. Une telle disposition n'est pas représentée sur les figures mais est de même nature que celle représentée en figure 6.

Le photodétecteur 6 peut également comporter plusieurs photodétecteurs. Notamment, il peut comporter deux photodétecteurs 60, 61 alignés selon une direction orthogonale à la direction de défilement des informations du disque (axe XX').

Ces photodétecteurs 60 et 61 sont placés de telle façon que, lorsque le faisceau F4 est centré par rapport à une piste du disque 5, ils reçoivent tous deux la même quantité de lumière.

Les photodétecteurs 60 et 61 fonctionnent alors selon un mode appelé push-pull et servent à asservir radialement l'axe YY' du dispositif de lecture par rapport à une piste d'informations du disque 5.

La combinaison de photodétecteurs 70 à 73 permettant de régler la focalisation du faisceau de lecture sur le disque 5, et des photodétecteurs 60, 61 permettant un asservissement radial du faisceau de lecture sur le disque, donne un ensemble représenté, sur la figure 7, en vue de dessous. Sur cette figure, on trouve de part et d'autre de la source laser 1, les quatre photodétecteurs 70 à 73 disposés en croix et les deux photodétecteurs 60 et 61 accolés l'un à l'autre.

L'intégration des lectures d'intensités lumineuses effectuées par ces différents photodétecteurs permet, outre leurs fonctions de réglage décrites précédemment de détecter les informations inscrites sur le disque.

Dans la description qui précède on a décrit un exemple de réalisation dans lequel le séparateur de faisceau est un séparateur de faisceaux par polarisation et notamment un séparateur comportant un milieu biréfringent.

Le système ainsi décrit fonctionne également avec un séparateur de faisceau 2 ne possèdant pas de milieu biréfringent.

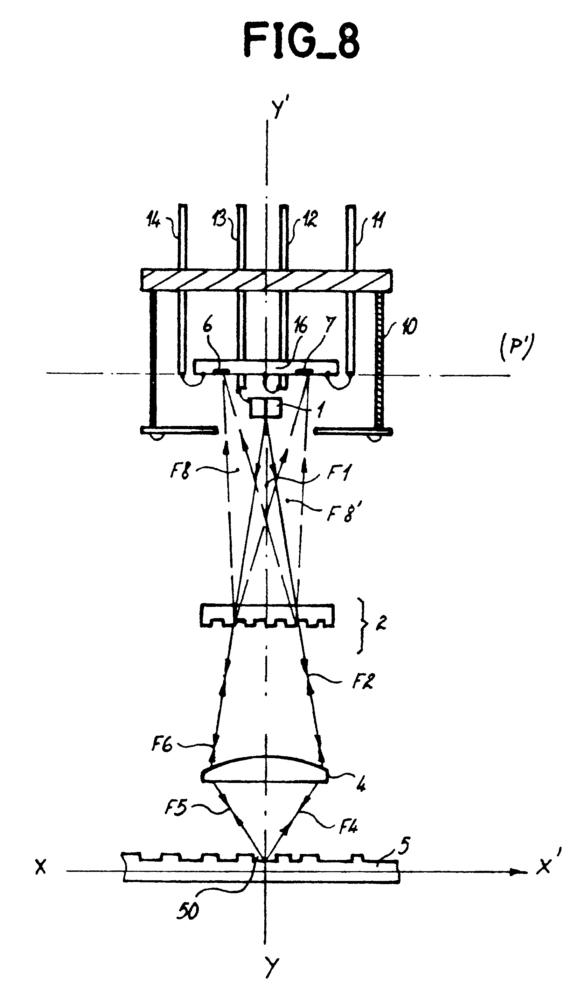

La figure 8 représente un tel mode de réalisation du dispositif de l'invention. Sur cet exemple de réalisation ayant une configuration similaire à celle de la figure 2, le séparateur de faisceau 2 est constitué d'une lame transparente dont l'indice de réfaction (n) est différent de celui du milieu situé de part et d'autre du séparateur 2. De plus, le séparateur 2 comporte un réseau de sillons.

Le dispositif de la figure 8 ne comporte pas de lame quart d'onde. Cependant, bien que cela ne soit pas représenté, il est possible d'en prévoir une entre le séparateur 2 et la lentille 4 par exemple. Cette lame quart d'onde permettra alors de réduire éventuellement le bruit sur le laser en évitant de renvoyer sur le laser de la lumière de même polarisation.

Les sillons du réseau du séparateur 2 sont, selon un exemple de réalisation, des sillons rectilignes parallèles.

Ils peuvent être également des sillons circulaires concentriques.

Pour introduire un astigmatisme, de façon à fonctionner comme décrit précédemment avec les quatres photodétecteurs 70, 71, 72, 73 de la figure 5 disposés en croix, on incline le séparateur 2 par rapport à l'axe YY' du dispositif comme cela est représenté en figure 6.

Le séparateur peut alors avoir des sillons rectilignes et il est incliné à contre-sens de la diffraction pour accroître l'astigmatisme. Il peut avoir également des sillons circulaires concentriques qui introduisent déjà un astigmatisme, mais en inclinant le séparateur, on accentue l'astigmatisme.

Les sillons peuvent également être de forme élliptique et le réseau introduit alors un astigmatisme comme un réseau incliné de sillons circulaires.

Les sillons peuvent également avoir une section de forme triangulaire. Plus précisément ils peuvent également avoir des formes en dents de scie telle que celle représentée en figure 9. La profondeur e de chaque dent a alors une valeur telle que l'un ait :

$$e.\Delta n \sim \lambda$$

$\Delta n$ étant la différence d'indices de réfraction du séparateur 2 et du milieu situé de part et d'autre

$\lambda$ étant la longueur d'onde lumineuses.

Selon une variante de réalisation, représentée en figure 10, le réseau de sillons du séparateur 2 peut être réfléchissant, par exemple métallisé.

De même dans le cas d'un séparateur comportant un milieu biréfringent, on peut prévoir une surface réfléchissante (hachurée par des traits inclinés sur la figure 11).

La figure 12 représente alors la position du séparateur dans le dispositif de détection par rapport à la source laser 1 et les détecteur 6,7 d'une part, et par rapport au milieu d'enregistrement 5 d'autre part. Comme on peut le voir le séparateur 2 travaille alors en réfléxion et réfraction et le fonctionnement est similaire à celui décrit précédemment.

Le dispositif de lecture optique ainsi décrit peut être réalisé de façon compacte avec des dimensions réduites par rapport aux dispositifs connus.

A titre d'exemple, on indique que la réalisation du dispositif de l'invention conduit à un dispositif de lecture optique dans lequel:

- l'ouverture de l'objectif (ou lentille 4) est de 5 mm;
- la distance de la lentille 4 au disque 5 = 5mm;
- la distance de la lentille 4 à la source laser 1 est de 20 mm :
- la distance de la source laser 1 au plan de la puce 16 est de 1 mm;
- la distance d'un photodétecteur (6 ou 7) à l'axe YY' est de 2 mm;
- le diamètre du boîtier 10 enfermant l'ensemble source laser 1 et puce 16 est de 9 mm.

Ces valeurs numériques n'ont été données qu'à titre d'exemple pour bien montrer le faible encombrement du dispositif de lecture obtenu. Mais il est bien évident qu'une autre réalisation pourrait conduire à des dimensions différentes.

## Revendications

1. Dispositif de lecture optique de support d'enregistrement optique comprenant:
   - une source laser (1) émettant selon un axe déterminé (YY'), un premier faisceau (F1) polarisé linéairement et de longueur d'onde (λ) déterminée;
   - un séparateur de faisceau (2) recevant le premier faisceau et le retransmettant sous la forme d'un deuxième faisceau (F2);
   - une lentille de focalisation (4) qui focalise ce deuxième faisceau (F2) sous la forme d'un quatrième faisceau de lecture (F4);
   - un support d'enregistrement (5) recevant le troisième faisceau de lecture (F4) et le réfléchissant sous la forme d'un cinquième faisceau (F5) vers la lentille de focalisation (4), et le séparateur de faisceaux (2) qui retransmet au moins un faisceau de détection (F8, F8');
   - au moins un dispositif de détection (6,7) recevant le faisceau de détection (F8, F8') et fournissant au moins un signal électrique traduisant la détection réalisée; le séparateur de faisceau (2) présentant un réseau de phase avec des moyens induisant un effet d'astigmatisme sur le faisceau de détection (F8, F'8), caractérisé en ce que le séparateur (2) est incliné par rapport à l'axe déterminé (YY').

2. Dispositif de lecture optique de support d'enregistrement optique comprenant:
   - une source laser (1) émettant selon un axe déterminé (YY'), un premier faisceau (F1) polarisé linéairement et de longueur d'onde (λ) déterminée;
   - un séparateur de faisceau (2) recevant le premier faisceau et le retransmettant sous la forme d'un deuxième faisceau (F2);
   - une lentille de focalisation (4) qui focalise ce deuxième faisceau (F2) sous la forme d'un quatrième faisceau de lecture (F4);
   - un support d'enregistrement (5) recevant le quatrième faisceau de lecture (F4) et le réfléchissant sous la forme d'un cinquième faisceau (F5) vers la lentille de focalisation (4), et le séparateur de faisceaux (2) qui retransmet au moins un faisceau de détection (F8, F8');
   - au moins un dispositif de détection (6,7) recevant le faisceau de détection (F8, F8') et fournissant au moins un signal électrique traduisant la détection réalisée; le séparateur de faisceau (2) présentant un réseau de phase avec des moyens induisant un effet d'astigmatisme sur le faisceau de détection (F8, F'8), caractérisé en ce que le réseau de phase présente un réseau de sillons de forme elliptique.

3. Dispositif selon la revendication 1 ou 2, caractérisé en ce que le réseau de phase comporte une lame transparente d'un indice de réfraction (n) différent du milieu environnant et portant un réseau de sillons.

4. Dispositif selon les revendications 1 et 3, caractérisé en ce que le réseau de sillons est un réseau de sillons rectilignes.

5. Dispositif selon les revendications 1 et 3, caractérisé en ce que le réseau de sillons est un réseau de sillons circulaires concentriques.

6. Dispositif selon les revendications 1 et 3, caractérisé en ce que les sillons sont de section rectangulaire.

7. Dispositif selon la revendication 1, caractérisé en ce que l'inclinaison du séparateur par rapport à la direction du faisceau de détection est à contresens de la diffraction.

8. Dispositif de lecture optique de support d'enregistrement optique comprenant:
   - une source laser (1) émettant selon un axe déterminé (YY'), un premier faisceau (F1) polarisé linéairement et de longueur d'onde (λ) déterminée;
   - un séparateur de faisceau (2) recevant le premier faisceau et le retransmettant sous la forme d'un deuxième faisceau (F2);
   - une lentille de focalisation (4) qui focalise ce deuxième faisceau (F2) sous la forme d'un quatrième faisceau de lecture (F4);
   - un support d'enregistrement (5) recevant le quatrième faisceau de lecture (F4) et le réfléchissant sous la forme d'un cinquième faisceau (F5) vers la lentille de focalisation (4), et le séparateur de faisceaux (2) qui retransmet au moins un faisceau de détection (F8, F8');
   - au moins un dispositif de détection (6,7) recevant le faisceau de détection (F8, F8') et fournissant au moins un signal électrique traduisant la détection réalisée;
   le séparateur de faisceau (2) comportant un réseau de phase avec des moyens induisant un effet d'astigmatisme sur le faisceau de détection (F8, F'8),
   caractérisé en ce que le réseau de phase présente une lame transparente d'un indice de réfraction (n) différent du milieu environnant et portant un réseau de sillons de section triangulaire ayant la forme de dents de scie dont une arête est perpendiculaire au plan de la lame transparente, le produit de la hauteur (e) de l'arête par la différence d'indice (Δn) de réfraction de la lame transparente par rapport au milieu environnant étant sensiblement égal à la longueur d'onde du faisceau lumineux.

9. Dispositif de lecture optique de support d'enregistrement optique comprenant:
   - une source laser (1) émettant selon un axe déterminé (YY'), un premier faisceau (F1) polarisé linéairement et de longueur d'onde (λ) déterminée;
   - un séparateur de faisceau (2) recevant le premier faisceau et le retransmettant sous la forme d'un deuxième faisceau (F2);
   - une lentille de focalisation (4) qui focalise ce deuxième faisceau (F2) sous la forme d'un quatrième faisceau de lecture (F4);
   - un support d'enregistrement (5) recevant le quatrième faisceau de lecture (F4) et le réfléchissant sous la forme d'un cinquième faisceau (F5) vers la lentille de focalisation (4), et le séparateur de faisceaux (2) qui retransmet au moins un faisceau de détection (F8, F8');
   - au moins un dispositif de détection (6,7) recevant le faisceau de détection (F8, F8') et fournissant au moins un signal électrique traduisant la détection réalisée;
   le séparateur de faisceau (2) comportant un réseau de phase avec des moyens induisant un effet d'astigmatisme sur le faisceau de détection (F8, F'8),
   caractérisé en ce que ledit séparateur de faisceau (2) possède des moyens de réflexion et travaille en réflexion vis-à-vis des faisceaux qu'il reçoit.

10. Dispositif selon l'une quelconque des revendications précédentes, caractérisé en ce qu'une lame quart d'onde est située entre le séparateur de faisceau (2) et la lentille de focalisation.

11. Dispositif de lecture optique de support d'enregistrement optique comprenant:
   - une source laser (1) émettant selon un axe déterminé (YY'), un premier faisceau (F1) polarisé linéairement et de longueur d'onde (λ) déterminée;
   - un séparateur de faisceau (2) recevant le premier faisceau et le retransmettant sous la forme d'un deuxième faisceau (F2);
   - une lentille de focalisation (4) qui focalise ce deuxième faisceau (F2) sous la forme d'un quatrième faisceau de lecture (F4);
   - un support d'enregistrement (5) recevant le quatrième faisceau de lecture (F4) et le réfléchissant sous la forme d'un cinquième faisceau (F5) vers la lentille de focalisation (4) et le séparateur de faisceaux (2) qui retransmet au moins un faisceau de détection (F8, F8');
   - au moins un dispositif de détection (6,7) recevant le faisceau de détection (F8,F8') et fournissant au moins un signal électrique traduisant la détection réalisée;
   le séparateur de faisceau (2) comportant un réseau de phase avec des moyens induisant un effet d'astigmatisme sur le faisceau de détection (F8, F'8),
   caractérisé en ce que le dispositif de détection (6, 7) est disposé sur un support (16) incliné par rapport à l'axe déterminé (YY').

12. Dispositif de lecture optique de support d'enregistrement optique comprenant:

- une source laser (1) émettant selon un axe déterminé (YY'), un premier faisceau (F1) polarisé linéairement et de longueur d'onde (λ) déterminée;
- un séparateur de faisceau (2) recevant le premier faisceau et le retransmettant sous la forme d'un deuxième faisceau (F2);
- une lentille de focalisation (4) qui focalise ce deuxième faisceau (F2) sous la forme d'un quatrième faisceau de lecture (F4);
- un support d'enregistrement (5) recevant le quatrième faisceau de lecture (F4) et le réfléchissant sous la forme d'un cinquième faisceau (F5) vers la lentille de focalisation (4), et le séparateur de faisceaux (2) qui retransmet au moins un faisceau de détection (F8, F8');
- au moins un dispositif de détection (6,7) recevant le faisceau de détection (F8, F8') et fournissant au moins un signal électrique traduisant la détection réalisée;

le séparateur de faisceau (2) comportant un réseau de phase avec des moyens induisant sur le faisceau de détection (F8, F'8) un effet d'astigmatisme permettant de déterminer si le quatrième faisceau (F4) est correctement focalisé sur le support (5),

caractérisé en ce que le dispositif de détection (6, 7) comporte, dans un même plan, des photodétecteurs (70 à 73) permettant de régler la focalisation du faisceau de lecture sur le support (5) et des photodétecteurs (60, 61) pour l'asservissement radial de l'axe déterminé (YY') par rapport à une piste d'information du support (5) et fonctionnant en mode push-pull.

13. Dispositif selon la revendication 12, caractérisé en ce que les détecteurs (70 à 73; 60, 61) de réglage de focalisation et d'asservissement radial permettent de détecter les informations inscrites sur le support (5).

14. Dispositif de lecture optique de support d'enregistrement optique comprenant :

- une source laser (1) émettant selon un axe déterminé (YY'), un premier faisceau (F1) polarisé linéairement et de longueur d'onde (λ) déterminée;
- un séparateur de faisceau (2) recevant le premier faisceau et le retransmettant sous la forme d'un deuxième faisceau (F2);
- une lentille de focalisation (4) qui focalise ce deuxième faisceau (F2) sous la forme d'un quatrième faisceau de lecture (F4);
- un support d'enregistrement (5) recevant le quatrième faisceau de lecture (F4) et le réfléchissant sous la forme d'un cinquième faisceau (F5) vers la lentille de focalisation (4), et d'un sixième faisceau (F6) vers le séparateur de faisceaux (2) qui retransmet au moins un faisceau de détection (F8, F8');

- au moins un dispositif de détection (6,7) recevant le faisceau de détection (F8, F8') et fournissant au moins un signal électrique traduisant la détection réalisée;

caractérisé en ce que le séparateur de faisceau par polarisation (2) comporte un réseau de phase (20) compris entre un premier milieu (23) et un deuxième milieu (24) dont l'un au moins est biréfringent, les indices des deux milieux étant égaux pour la polarisation linéaire du premier faisceau (F1).

15. Dispositif de lecture optique selon la revendication 14, caractérisé en ce que le séparateur de faisceau comporte :

- une lame rigide transparente (23) d'un premier indice de réfraction ($n_o$) et portant un réseau de sillons (20) faisant office de réseau de phase;
- un matériau biréfringent (24) accolé au réseau de sillons (20) et remplissant les sillons de ce réseau, l'indice de réfraction de ce matériau biréfringent (24) ayant une première valeur égale à un premier indice ($n_o$) de la lame rigide transparente (23) pour la polarisation du deuxième faisceau (F2), et ayant une deuxième valeur ($n_e$) d'indice de biréfringence pour la polarisation du sixième faisceau (F6);
- une lame transparente (25) pour maintenir le matériau biréfringent (24) contre la lame rigide transparente (23).

16. Dispositif de lecture optique selon la revendication 15, caractérisé en ce que la lame rigide transparente (23) est en verre.

17. Dispositif de lecture optique selon la revendication 15, caractérisé en ce que la lame rigide transparente (23) est un matériau polymère.

18. Dispositif de lecture optique selon la revendication 15, caractérisé en ce que le matériau biréfringent (24) est un cristal liquide dont l'axe des molécules est parallèle aux sillons du réseau (20) de la lame rigide transparente (23).

19. Dispositif de lecture optique selon la revendication 15, caractérisé en ce que le matériau biréfringent (24) est un matériau polymère dont l'orientation des molécules est obtenue par frottement dudit matériau polymère (24).

20. Dispositif de lecture optique selon la revendication 15, caractérisé en ce que le matériau biréfringent (24) est un matériau polymère présentant une phase cristal liquide nématique à haute température se conservant lors du refroidissement en phase polymère.

21. Dispositif de lecture optique selon la revendication 15, caractérisé en ce que la profondeur (e) des sillons est proportionnelle à la demi-longueur d'onde d'émission de la source laser (1) et inversement proportionnelle à la différence des indices de la plaque rigide transparente et du matériau biréfringent.

22. Dispositif de lecture optique selon la revendication 15, dans lequel le support d'enregistrement est situé selon un plan (P), caractérisé en ce que le premier faisceau (F1) est perpendiculaire au plan du support d'enregistrement (5) et que le séparateur de faisceau (2) est placé sur le trajet de ce faisceau (F1).

23. Dispositif de lecture optique selon la revendication 15, caractérisé en ce que les sillons (20) de la lame transparente (23) sont rectilignes et parallèles.

24. Dispositif de lecture optique selon la revendication 15, caractérisé en ce que les sillons (20) sont des courbes.

25. Dispositif de lecture optique selon la revendication 24, caractérisé en ce que les sillons sont des portions de cercles concentriques.

26. Dispositif de lecture optique selon la revendication 25, caractérisé en ce que les sillons (20) sont des portions d'ellipses concentriques.

27. Dispositif de lecture optique selon la revendication 14, caractérisé en ce que le réseau de phase (20) est plan.

28. Dispositif de lecture optique selon la revendication 14, caractérisé en ce que le réseau de phase (20) est perpendiculaire à l'axe (YY') du premier faisceau (F1).

29. Dispositif de lecture optique selon la revendication 14, caractérisé en ce que le réseau de phase (20) est incliné par rapport à l'axe (YY') du premier faisceau (F1).

30. Dispositif de lecture optique selon la revendication 14, caractérisé en ce que le dispositif de détection (6, 7) est situé à proximité de la source (1), dans un plan non conjugué du support d'enregistrement, sur le trajet du faisceau de détection (F8, F8').

31. Dispositif de lecture optique selon la revendication 22, caractérisé en ce que le dispositif de détection est situé sensiblement selon l'axe (YY') du premier faisceau (F1).

32. Dispositif de lecture optique selon la revendication 14, caractérisé en ce que le dispositif de détection comporte une pluralité de détecteurs de lumière (6, 7).

33. Dispositif de lecture optique selon la revendication 32, dans lequel le support d'enregistrement se déplace selon une direction (XX'), caractérisé en ce que le dispositif de détection comporte au moins deux détecteurs disposés dans un plan (P') parallèle au plan (P) du support d'enregistrement (5), selon une direction orthogonale à la direction de déplacement (XX') du support d'enregistrement (5).

34. Dispositif de lecture optique selon la revendication 32, dans lequel le support d'enregistrement se déplace selon une direction (XX'), caractérisé en ce que le dispositif de détection comporte au moins deux détecteurs disposés dans un plan parallèle au plan (P) du support d'enregistrement (5) selon une direction parallèle à la direction de déplacement (XX') du support d'enregistrement (5).

35. Dispositif de lecture optique selon la revendication 33, caractérisé en ce que le dispositif de détection comporte en outre deux détecteurs disposés selon une direction parallèle à la direction de déplacement (XX') du support d'enregistrement.

36. Dispositif de lecture optique selon la revendication 14, caractérisé en ce que le support d'enregistrement est un disque optique.

37. Dispositif de lecture optique selon la revendication 14, caractérisé en ce que le séparateur de faisceau comporte un moyen de réflexion plan associé au premier milieu (23).

## Claims

1. An optical reading device for optical recording media comprising:
   - a first laser source (1) emitting, along a predetermined axis (YY'), a first linearly polarized beam (F1) having a predetermined wavelength ($\lambda$);

- a beam splitter (2) receiving the first beam and retransmitting it in the form of a second beam (F2);
- a focusing lens (4) which focuses this second beam (F2) in the form of a fourth reading beam (F4);
- a recording medium (5) receiving the third reading beam (F4) and reflecting same in form of a fifth beam (F5) to the focusing lens (4), and the beam splitter (2) which retransmits at least one detection beam (F8 and F8');
- at least one detection device (6 and 7) receiving the detection beam (F8 and F8') and supplying at least one electrical signal translating the detection performed;

the beam splitter (2) having a phase array with means inducing an astigmatic effect in the detection beam (F8 and F'8),

characterized in that the splitter (2) is inclined in relation to the predetermined axis (ZZ').

2. An optical reading device for optical recording media comprising:
- a first laser source (1) emitting, along a predetermined axis (YY'), a first linearly polarized beam (F1) having a predetermined wavelength ($\lambda$);
- a beam splitter (2) receiving the first beam and retransmitting it in the form of a second beam (F2);
- a focusing lens (4) which focuses this second beam (F2) in the form of a fourth reading beam (F4);
- a recording medium (5) receiving the fourth reading beam (F4) and reflecting same in the form of a fifth beam (F5) to the focusing lens (4), and the beam splitter (2) which retransmits at least one detection beam (F8 and F8');
- at least one detection device (6 and 7) receiving the detection beam (F8 and F8') and supplying at least one electrical signal translating the detection performed;

the beam splitter (2) having a phase array with means inducing an astigmatic effect in the detection beam (F8 and F'8),

characterized in that the phase array has an array of grooves with an elliptical configuration.

3. The device as claimed in claim 1 or claim 2, characterized in that the phase array comprises a transparent sheet with an index of refraction (n) different to the surrounding medium and bearing an array of grooves.

4. The device as claimed in claims 1 and 3, characterized in that the array of grooves is an array of straight grooves.

5. The device as claimed in claims 1 and 3, characterized in that the array of grooves is an array of circular concentric grooves.

6. The device as claimed in claims 1 and 3, characterized in that the grooves have a rectangular cross section.

7. The device as claimed in claim 1, characterized in that the inclination of the splitter in relation to direction of the beam is opposite to the diffraction.

8. An optical reading device for optical recording media comprising:
- a laser source (1) emitting, along a predetermined axis (YY'), a first linearly polarized beam (F1) having a predetermined wavelength ($\lambda$);
- a beam splitter (2) receiving the first beam and retransmitting it in the form of a second beam (F2);
- a focusing lens (4) which focuses this second beam (F2) in the form of a fourth reading beam (F4);
- a recording medium (5) receiving the fourth reading beam (F4) and reflecting same in the form of a fifth beam to the focusing lens (4), and the beam splitter (2) which retransmits at least one detection beam (F8 and F8');
- at least one detection device (6 and 7) receiving the detection beam (F8 and F8') and supplying at least one electrical signal translating the detection performed;

the beam splitter (2) having a phase array with means inducing an astigmatic effect in the detection beam (F8 and F'8),

characterized in that the phase array includes a transparent sheet with an index of refraction (n) different to the surrounding medium and bearing an array of grooves with a triangular cross section having the form of saw-teeth whose one edge is perpendicular to the plane of the transparent sheet, the product of the height (e) of the edge with the difference in the index ($\Delta n$) of refraction of the transparent sheet in relation to surrounding medium being substantially equal to the wavelength of the light beam.

9. An optical reading device for optical recording media comprising:
   - a first laser source (1) emitting, along a predetermined axis (YY'), a first linearly polarized beam (F1) having a predetermined wavelength (λ);
   - a beam splitter (2) receiving the first beam and retransmitting it in the form of a second beam (F2);
   - a focusing lens (4) which focuses this second beam (F2) in the form of a fourth reading beam (F4);
   - a recording medium (5) receiving the fourth reading beam (F4) and reflecting same in the form of a fifth beam (F5) to the focusing lens (4), and the beam splitter (2) which retransmits at least one detection beam (F8 and F8');
   - at least one detection device (6 and 7) receiving the detection beam (F8 and F8') and supplying at least one electrical signal translating the detection performed;

   the beam splitter (2) having a phase array with means inducing an astigmatic effect in the detection beam (F8 and F'8),
   characterized in that the beam splitter (2) possesses reflecting means and operates to reflect the beams which it receives.

10. The device as claimed in any one of the preceding claims, characterized in that a quarter wavelength sheet is positioned between the beam splitter (2) and the focusing lens.

11. An optical reading device for optical recording media comprising:
    - a first laser source (1) emitting, along a predetermined axis (YY'), a first linearly polarized beam (F1) having a predetermined wavelength (λ);
    - a beam splitter (2) receiving the first beam and retransmitting it in the form of a second beam (F2);
    - a focusing lens (4) which focuses this second beam (F2) in the form of a fourth reading beam (F4);
    - a recording medium (5) receiving the fourth reading beam (F4) and reflecting same in the form of a fifth bean (F5) to the focusing lens (4), and the beam splitter (2) which retransmits at least one detection beam (F8 and F8');
    - at least one detection device (6 and 7) receiving the detection beam (F8 and F8') and supplying at least one electrical signal translating the detection performed;

    the beam splitter (2) having a phase array with means inducing an astigmatic effect in the detection beam (F8 and F'8),
    characterized in that the detection device (6 and 7) is positioned on a support (16) which is inclined in relation to the predetermined axis (YY').

12. An optical reading device for optical recording media comprising:
    - a first laser source (1) emitting, along a predetermined axis (YY'), a first linearly polarized beam (F1) having a predetermined wavelength (λ);
    - a beam splitter (2) receiving the first beam and retransmitting it in the form of a second beam (F2);
    - a focusing lens (4) which focuses this second beam (F2) in the form of a fourth reading beam (F4);
    - a recording medium (5) receiving the fourth reading beam (F4) and reflecting same in the form of a fifth beam (F5) to the focusing lens (4), and the beam splitter (2) which retransmits at least one detection beam (F8 and F8');
    - at least one detection device (6 and 7) receiving the detection beam (F8 and F8') and supplying at least one electrical signal translating the detection performed;

    the beam splitter (2) having a phase array with means inducing an astigmatic effect in the detection beam (F8 and F'8) rendering it possible to ascertain if the beam (F4) is correctly focussed on the support (5),
    characterized in that the detection device (6 and 7) comprises, in one and the same plane, photodetectors (70 through 73) making possible the regulation of the focusing of the reading beam on the medium (5) and photodetectors (60 and 61) in order to correct the radial position of the predetermined axis (YY') in relation to an information track on the medium (5) and functioning in a push-pull mode.

13. The device as claimed in claim 12, characterized in that the detectors (70 through 73; 60 and 61) for the regulation of focusing and radial position correction render it possible to detect the information inscribed on the medium (5).

14. An optical reading device for optical recording media comprising:

- a laser source (1) emitting, along a predetermined axis (YY'), a first linearly polarized beam (F1) having a predetermined wavelength ($\lambda$);
- a beam splitter (2) receiving the first beam and retransmitting it in the form of a second beam (F2);
- a focusing lens (4) which focuses this second beam (F2) in the form of a fourth reading beam (F4);
- a recording medium (5) receiving the fourth reading beam (F4) and reflecting same in the form of a fifth beam (F5) to the focusing lens (4), and a sixth beam (F6) to the beam splitter (2) which retransmits at least one detection beam (F8 and F8');
- at least one detection device (6 and 7) receiving the detection beam (F8 and F8') and supplying at least one electrical signal translating the detection performed;

characterized in that the polarization type beam splitter (2) comprises a phase array (20) positioned between a first medium (23) and a second medium (24) of which the first one is birefringent, the indices of the two media being equal for the linear polarization of the first beam (F1).

15. The optical reading device as claimed in claim 14, characterized in that the beam splitter comprises:
- a rigid transparent sheet (23) with a first index ($n_o$) of refraction and bearing an array of grooves (20) to function as a phase array;
- a birefringent material (24) adjacent to the groove array (20) and filling the grooves of the said array, the index of refraction of the birefringent material (24) having a first value equal to a first index ($n_o$) of the rigid transparent sheet (23) for the polarization of the second beam (F2) and having a second value ($n_e$) of the index of birefringence for the polarization of the sixth beam (F6); and
- a transparent sheet (25) in order to hold the birefringent material (24) on the rigid transparent sheet (23).

16. The optical reading device as claimed in claim 15, characterized in that the rigid transparent sheet (23) is made of glass.

17. The optical reading device as claimed in claim 15, characterized in that the rigid transparent sheet (23) is made of polymer material.

18. The optical reading device as claimed in claim 15, characterized in that the birefringent material (24) is a liquid crystal whose molecular axis is parallel to the grooves of the array (20) of the rigid transparent sheet (23).

19. The optical reading device as claimed in claim 15, characterized in that the birefringent material (24) is a polymer material whose alignment of the molecules is produced by friction of the said polymer material (24).

20. The optical reading device as claimed in claim 15, characterized in that the birefringent material (24) is a polymer material having a high temperature nematic liquid crystal phase maintaining a polymer phase when cooled.

21. The optical reading device as claimed in claim 15, characterized in that the depth (e) of the grooves is proportional to half the wavelength of emission of the laser source (1) and is inversely proportional to the difference of the indices of the rigid transparent sheet and of the birefringent material.

22. The optical reading device as claimed in claim 15, wherein the recording medium is in alignment with a plane (P), characterized in that the first beam (F1) is perpendicular to the plane of the recording medium (5) and in that the beam splitter (2) is stationed on the path of the said beam (F1).

23. The optical reading device as claimed in claim 15, characterized in that the grooves (20) of the transparent sheet (23) are straight and parallel.

24. The optical reading device as claimed in claim 15, characterized in that the grooves (20) are curves.

25. The optical reading device as claimed in claim 24, characterized in that the grooves are portions of concentric circles.

26. The optical reading device as claimed in claim 25, characterized in that the grooves (20) are portions of concentric ellipses.

27. The optical reading device as claimed in claim 14, characterized in that the phase array (20) is plane.

28. The optical reading device as claimed in claim 14, characterized in that the phase array (20) is perpendicular to the axis (YY') of the first beam (F1).

29. The optical reading device as claimed in claim 14, characterized in that the phase array (20) is inclined in relation to the axis (YY') of the first beam (F1).

30. The optical reading device as claimed in claim 14, characterized in that the detection device (6 and 7) is positioned in the vicinity of the source (1) in a plane, which is not conjugate to the recording medium, on the path of the detection beam (F8 and F8').

31. The optical reading device as claimed in claim 22, characterized in that the detection device is positioned essentially in alignment with the axis (YY') of the first beam (F1).

32. The optical reading device as claimed in claim 14, characterized in that the detection device comprises a plurality of light detectors (6 and 7).

33. The optical reading device as claimed in claim 32, wherein the recording medium undergoes displacement in one direction (XX'), characterized in that the detection device comprises at least two detectors positioned in a plane (P') parallel to the plane (P) of the recording medium (5) following a direction at a right angle to the direction (XX') of displacement of the recording medium (5).

34. The optical reading device as claimed in claim 32, wherein the recording medium undergoes displacement in a one direction (XX'), characterized in that the detection device comprises at least two detectors positioned in a plane parallel to the plane (P) of the recording medium (5) following a direction parallel to the direction of the displacement (XX') of the recording medium (5).

35. The optical reading device as claimed in claim 15, characterized in that the detection device comprises furthermore two detectors positioned in a direction parallel to the direction of the displacement (XX') of the recording medium.

36. The optical reading device as claimed in claim 14, characterized in that the recording medium is an optical disk.

37. The optical reading device as claimed in claim 14, characterized in that the beam splitter comprises a means for reflection in a plane associated with the first medium (23).

**Patentansprüche**

1. Vorrichtung zum optischen Lesen eines optischen Aufzeichnungsträgers, mit:
   - einer Laserquelle (1), die entlang einer vorgegebenen Achse (Y, Y') einen ersten linear polarisierten Strahl (F1) mit vorgegebener Wellenlänge ($\lambda$) aussendet;
   - einem Strahlteiler (2), der den ersten Strahl empfängt und ihn in Form eines zweiten Strahls (F2) überträgt;
   - einer Fokussierungslinse (4), die diesen zweiten Strahl in Form eines vierten Lesestrahls (F4) fokussiert;
   - einem Aufzeichnungsträger (5), der den vierten Lesestrahl (F4) empfängt und ihn in Form eines fünften Strahls (F5) an die Fokussierungslinse (4) und an den Strahlteiler (2) reflektiert, wobei der Strahlteiler (2) wenigstens einen Detektionsstrahl (F8, F8') überträgt;
   
   wenigstens einer Detektionsvorrichtung (6, 7), die den Detektionsstrahl (F8, F8') empfängt und wenigstens ein die ausgeführte Detektion wiedergebendes elektrisches Signal liefert;
   
   wobei der Strahlteiler (2) ein Phasengitter mit Mitteln, die im Detektionsstrahl (F8, F8') einen Astigmatismus-Effekt bewirken, aufweist,
   
   dadurch gekennzeichnet, daß der Teiler (2) in bezug auf die gegebene Achse (Y, Y') geneigt ist.

2. Vorrichtung zum optischen Lesen eines optischen Aufzeichnungsträgers, mit:
   - einer Laserquelle (1), die entlang einer gegebenen Achse (Y, Y') einen ersten linear polarisierten Strahl (F1) mit gegebener Wellenlänge ($\lambda$) aussendet;
   - einem Strahlteiler (2), der den ersten Strahl empfängt und ihn in Form eines zweiten Strahls (F2) überträgt;
   - einer Fokussierungslinse (4), die diesen zweiten Strahl (F2) in Form eines vierten Lesestrahls (F4) fokussiert;
   - einem Aufzeichnungsträger (5), der den vierten Lesestrahl (F4) empfängt und ihn in Form eines fünften Strahls (F5) an die Fokussierungslinse (4) und an den Strahlteiler (2) überträgt, wobei der Strahlteiler (2) wenigstens einen Detektionsstrahl (F8, F8') überträgt;
   - wenigstens einer Detektionsvorrichtung (6, 7), die den Detektionsstrahl (F8, F8') empfängt und wenigstens ein die ausgeführte Detektion wiedergebendes elektrisches Signal liefert;

wobei der Strahlteiler (2) ein Phasengitter mit Mitteln, die im Detektionsstrahl einen Astigmatismus-Effekt bewirken, aufweist,

dadurch gekennzeichnet, daß das Phasengitter ein Gitter aus elliptisch geformten Rillen aufweist.

3. Vorrichtung gemäß Anspruch 1 oder 2, dadurch gekennzeichnet, daß das Phasengitter ein durchsichtiges Plättchen mit einem vom umgebenden Medium verschiedenen Brechungsindex (n) aufweist und ein Rillengitter trägt.

4. Vorrichtung gemäß den Ansprüchen 1 und 3, dadurch gekennzeichnet, daß das Rillengitter ein Gitter von geraden Rillen ist.

5. Vorrichtung gemäß den Ansprüchen 1 und 3, dadurch gekennzeichnet, daß das Rillengitter ein Gitter von kreisförmigen, konzentrischen Rillen ist.

6. Vorrichtung gemäß den Ansprüchen 1 und 3, dadurch gekennzeichnet, daß die Rillen einen rechtwinkligen Querschnitt besitzen.

7. Vorrichtung gemäß Anspruch 1, dadurch gekennzeichnet, daß der Sinn der Neigung des Teilers in bezug auf die Richtung des Detektionsstrahls entgegengesetzt zu dem der Beugung ist.

8. Vorrichtung zum optischen Lesen eines optischen Aufzeichnungsträgers, mit:
   - einer Laserquelle (1), die entlang einer gegebenen Achse (Y, Y') einen ersten linear polarisierten Strahl (F1) mit gegebener Wellenlänge (λ) aussendet;
   - einem Strahlteiler (2), der den ersten Strahl empfängt und ihn in Form eines zweiten Strahls (F2) überträgt;
   - einer Fokussierungslinse (4), die diesen zweiten Strahl (F2) in Form eines vierten Lesestrahls (F4) fokussiert;
   - einem Aufzeichnungsträger (5), der den vierten Laserstrahl (F4) empfängt und ihn in Form eines fünften Strahls (F5) auf die Fokussierungslinse (4) und den Strahlteiler (2) reflektiert, wobei der Strahlteiler (2) wenigstens einen Detektionsstrahl (F8, F8') überträgt;
   - wenigstens einer Detektionsvorrichtung (6, 7), die den Detektionsstrahl (F8, F8') empfängt und wenigstens ein die ausgeführte Detektion wiedergebendes elektrisches Signal liefert;
   wobei der Strahlteiler (2) ein Phasengitter mit Mitteln, die im Detektionsstrahl (F8, F8') einen Astigmatismus-Effekt bewirken, umfaßt,

dadurch gekennzeichnet, daß das Phasengitter ein durchsichtiges Plättchen mit einem vom umgebenden Medium verschiedenen Brechungsindex (n) aufweist und ein Gitter mit Rillen von dreieckigem Querschnitt, die die Form von Sägezähnen besitzen, von denen eine Kante senkrecht zur Ebene des durchsichtigen Plättchens orientiert ist, trägt, wobei das Produkt aus der Höhe (e) der Kante und der Differenz der Brechungsindizes (n) der Brechung des durchsichtigen Plättchens bezüglich des umgebenden Mediums im wesentlichen gleich der Wellenlänge des Lichtstrahls ist.

9. Vorrichtung zum optischen Lesen eines optischen Aufzeichnungsträgers, mit:
   - einer Laserquelle (1), die entlang einer gegebenen Achse (Y, Y') einen linear polarisierten ersten Strahl (F1) mit gegebener Wellenlänge (λ) aussendet;
   - einem Strahlteiler (2), der den ersten Strahl empfängt und ihn in Form eines zweiten Strahls (F2) überträgt;
   - einer Fokussierungslinse (4), die diesen zweiten Strahl (F2) in Form eines vierten Lesestrahls (F4) fokussiert;
   - einem Aufzeichnungsträger (5), der den vierten Lesestrahl (F4) empfängt und ihn in Form eines fünften Strahls (F5) auf die Fokussierungslinse (4) und den Strahlteiler (2) reflektiert, wobei der Strahlteiler (2) wenigstens einen Detektionsstrahl (F8, F8') überträgt;
   - wenigstens einer Detektionsvorrichtung (6, 7), die den Detektionsstrahl (F8, F8') empfängt und wenigstens ein die ausgeführte Detektion wiedergebendes elektrisches Signal liefert;
   wobei der Strahlteiler (2) ein Phasengitter mit Mitteln, die im Detektionsstrahl (F8, F8') einen Astigmatismus-Effekt bewirken, umfaßt,

   dadurch gekennzeichnet, daß der Strahlteiler (2) Reflexionsmittel besitzt und gegenüber den Strahlen, die er empfängt, in Reflexion arbeitet.

10. Vorrichtung gemäß einem der vorangehenden Ansprüche, dadurch gekennzeichnet, daß zwischen dem Strahlteiler (2) und der Fokussierungslinse ein 1/4-Wellenlängen-Plättchen angeordnet ist.

11. Vorrichtung zum optischen Lesen eines optischen Aufzeichnungsträgers, mit:
    - einer Laserquelle (1), die entlang einer gegebenen Achse (Y, Y') einen linear polarisierten ersten Strahl (F1) mit gegebener Wellenlänge (λ) aussendet;

- einem Strahlteiler (2), der den ersten Strahl empfängt und ihn in Form eines zweiten Strahls (F2) überträgt;
- einer Fokussierungslinse (4), die diesen zweiten Strahl (F2) in Form eines vierten Lesestrahls (F4) fokussiert;
- einem Aufzeichnungsträger (5), der den vierten Lesestrahl (F4) empfängt und ihn in Form eines fünften Strahls (F5) auf die Fokussierungslinse (4) und den Strahlteiler (2) reflektiert, wobei der Strahlteiler (2) wenigstens einen Detektionsstrahl (F8, F8') überträgt;
- wenigstens einer Detektionsvorrichtung (6, 7), die den Detektionsstrahl (F8, F8') empfängt und wenigstens ein die ausgeführte Detektion wiedergebendes elektrisches Signal liefert;

wobei der Strahlteiler (2) ein Phasengitter mit Mitteln, die im Detektionsstrahl (F8, F8') einen Astigmatismus-Effekt bewirken, umfaßt,

dadurch gekennzeichnet, daß die Detektionsvorrichtung (6, 7) auf einem Träger (16) angeordnet ist, der in bezug auf die gegebene Achse (Y, Y') geneigt ist.

12. Vorrichtung zum optischen Lesen eines optischen Aufzeichnungsträgers, mit:
- einer Laserquelle (1), die entlang einer gegebenen Achse (Y, Y') einen linear polarisierten ersten Strahl (F1) mit gegebener Wellenlänge (λ) aussendet;
- einem Strahlteiler (2), der den ersten Strahl empfängt und ihn in Form eines zweiten Strahls (F2) überträgt;
- einer Fokussierungslinse (4), die diesen zweiten Strahl (F2) in Form eines vierten Lesestrahls (F4) fokussiert;
- einem Aufzeichnungsträger (5), der den vierten Lesestrahl (F4) empfängt und ihn in Form eines fünften Strahls (F5) auf die Fokussierungslinse (4) und den Strahlteiler (2) reflektiert, wobei der Strahlteiler (2) wenigstens einen Detektionsstrahl (F8, F8') überträgt;
- wenigstens einer Detektionsvorrichtung (6, 7), die den Detektionsstrahl (F8, F8') empfängt und wenigstens ein die ausgeführte Detektion wiedergebendes elektrisches Signal liefert;

wobei der Strahlteiler (2) ein Phasengitter mit Mitteln, die im Detektionsstrahl (F8, F8') einen Astigmatismus-Effekt bewirken, um festzustellen, ob der vierte Strahl (F4) auf dem Träger (5) richtig fokussiert ist, umfaßt,

dadurch gekennzeichnet, daß die Detektionsvorrichtung (6, 7) in derselben Ebene Photodetektoren (70 bis 73), die die Fokussierung des Lesestrahls auf dem Träger (5) einzustellen erlauben, und im Gegentakt-Modus arbeitende Photodetektoren (60, 61) zum radialen Einstellen der gegebenen Achse (Y, Y') in bezug auf eine Informationsspur des Trägers (5) umfaßt.

13. Vorrichtung gemäß Anspruch 12, dadurch gekennzeichnet, daß die Detektoren (70 bis 73; 60, 61) zum Einstellen der Fokussierung und zur radialen Einstellung die auf den Träger (5) eingeschriebenen Informationen zu erfassen erlauben.

14. Vorrichtung zum optischen Lesen eines optischen Aufzeichnungsträgers, mit:
- einer Laserquelle (1), die entlang einer gegebenen Achse (Y, Y') einen linear polarisierten ersten Strahl (F1) mit gegebener Wellenlänge (λ) aussendet;
- einem Strahlteiler (2), der den ersten Strahl empfängt und ihn in Form eines zweiten Strahls (F2) überträgt;
- einer Fokussierungslinse (4), die diesen zweiten Strahl (F2) in Form eines vierten Lesestrahls (F4) fokussiert;
- einem Aufzeichnungsträger (5), der den vierten Lesestrahl (F4) empfängt und ihn in Form eines fünften Strahls (F5) auf die Fokussierungslinse (4) und in Form eines sechsten Strahls (F6) auf den Strahlteiler (2) reflektiert, wobei der Strahlteiler (2) wenigstens einen Detektionsstrahl (F8, F8') überträgt;
- wenigstens einer Detektionsvorrichtung (6, 7), die den Detektionsstrahl (F8, F8') empfängt und wenigstens ein die ausgeführte Detektion wiedergebendes elektrisches Signal liefert;

dadurch gekennzeichnet, daß der Polarisations-Strahlteiler (2) ein Phasengitter (20) aufweist, das zwischen einem ersten Medium (23) und einem zweiten Medium (24) enthalten ist, von denen wenigstens eines doppelbrechend ist, wobei die Indizes der zwei Medien in bezug auf die lineare Polarisation des ersten Strahls (F1) gleich sind.

15. Vorrichtung zum optischen Lesen gemäß Anspruch 14, dadurch gekennzeichnet, daß der Strahlteiler umfaßt:
- ein durchsichtiges starres Plättchen (23) mit einem ersten Brechungsindex (n0), das ein als Phasengitter dienendes Rillengitter (20) trägt;

- ein doppelbrechendes Material (24), das am Rillengitter (20) angebracht ist und die Rillen dieses Gitters auffüllt, wobei der Brechungsindex dieses doppelbrechenden Materials (24) einen ersten Wert, der gleich einem ersten Index ($n_o$) des durchsichtigen starren Plättchens (23) für die Polarisation des zweiten Strahls (F2) ist, und einen zweiten Doppelbrechungsindex-Wert ($n_e$) für die Polarisation des sechsten Strahls (F6) besitzt;
- ein durchsichtiges Plättchen (25), um das doppelbrechende Material (24) gegen das durchsichtige starre Plättchen (23) zu halten.

16. Vorrichtung zum optischen Lesen gemäß Anspruch 15, dadurch gekennzeichnet, daß das durchsichtige starre Plättchen (23) aus Glas ist.

17. Vorrichtung zum optischen Lesen gemäß Anspruch 15, dadurch gekennzeichnet, daß das durchsichtige starre Plättchen (23) ein Polymer-Material ist.

18. Vorrichtung zum optischen Lesen gemäß Anspruch 15, dadurch gekennzeichnet, daß das doppelbrechende Material (24) ein Flüssigkristall ist, dessen Molekülachse parallel zu den Rillen des Gitters (20) des durchsichtigen starren Plättchens (23) ist.

19. Vorrichtung zum optischen Lesen gemäß Anspruch 15, dadurch gekennzeichnet, daß das dopppelbrechende Material (24) ein Polymer-Material ist, bei dem die Ausrichtung der Moleküle durch Reiben des Polymer-Materials (24) erhalten wird.

20. Vorrichtung zum optischen Lesen gemäß Anspruch 15, dadurch gekennzeichnet, daß das doppelbrechende Material (24) ein Polymer-Material ist, das bei hoher Temperatur eine nematische Flüssigkristallphase aufweist, die bei der Abkühlung in die Polymerphase erhalten bleibt.

21. Vorrichtung zum optischen Lesen gemäß Anspruch 15, dadurch gekennzeichnet, daß die Tiefe (e) der Rillen proportional zur halben Wellenlänge der Emission der Laserquelle (1) und umgekehrt proportional zur Differenz der Indizes der durchsichtigen starren Platte und des doppelbrechenden Materials ist.

22. Vorrichtung zum optischen Lesen gemäß Anspruch 15, in der der Aufzeichnungsträger in einer Ebene (P) angeordnet ist, dadurch gekennzeichnet, daß der erste Strahl (F1) senkrecht zur Ebene des Aufzeichnungsträgers (5) orientiert ist und daß sich der Strahlteiler (2) in der Bahn dieses Strahls (F1) befindet.

23. Vorrichtung zum optischen Lesen gemäß Anspruch 15, dadurch gekennzeichnet, daß die Rillen (20) des durchsichtigen Plättchens (23) geradlinig und parallel sind.

24. Vorrichtung zum optischen Lesen gemäß Anspruch 15, dadurch gekennzeichnet, daß die Rillen (20) gebogen sind.

25. Vorrichtung zum optischen Lesen gemäß Anspruch 24, dadurch gekennzeichnet, daß die Rillen Abschnitte konzentrischer Kreise sind.

26. Vorrichtung zum optischen Lesen gemäß Anspruch 25, dadurch gekennzeichnet, daß die Rillen (20) Abschnitte konzentrischer Ellipsen sind.

27. Vorrichtung zum optischen Lesen gemäß Anspruch 14, dadurch gekennzeichnet, daß das Phasengitter (20) eben ist.

28. Vorrichtung zum optischen Lesen gemäß Anspruch 14, dadurch gekennzeichnet, daß das Phasengitter (20) senkrecht zur Achse (Y, Y') des ersten Strahls (F1) orientiert ist.

29. Vorrichtung zum optischen Lesen gemäß Anspruch 14, dadurch gekennzeichnet, daß das Phasengitter (20) in bezug auf die Achse (Y, Y') des ersten Strahls (F1) geneigt ist.

30. Vorrichtung zum optischen Lesen gemäß Anspruch 14, dadurch gekennzeichnet, daß die Detektionsvorrichtung (6, 7) in der Nähe der Quelle (1) in einer zum Aufzeichnungsträger nicht konjugierten Ebene in der Bahn des Detektionsstrahls (F8, F8') angeordnet ist.

31. Vorrichtung zum optischen Lesen gemäß Anspruch 22, dadurch gekennzeichnet, daß die Detektionsvorrichtung im wesentlichen entlang der Achse (Y, Y') des ersten Strahls (F1) angeordnet ist.

32. Vorrichtung zum optischen Lesen gemäß Anspruch 14, dadurch gekennzeichnet, daß die Detektionsvorrichtung eine Mehrzahl von Lichtdetektoren (6, 7) umfaßt.

33. Vorrichtung zum optischen Lesen gemäß Anspruch 32, in der sich der Aufzeichnungsträger entlang einer Richtung (X, X') verschiebt, dadurch gekennzeichnet, daß die Detektionsvorrichtung wenigstens zwei Detektoren aufweist, die in einer zur Ebene (P) des Aufzeichnungsträgers (5) parallelen Ebene (P') in einer zur Verschiebungsrichtung (X, X') des Aufzeichnungsträgers (5) senkrechten Richtung angeordnet sind.

34. Vorrichtung zum optischen Lesen gemäß Anspruch 32, in der sich der Aufzeichnungsträger in einer Richtung (X, X') verschiebt, dadurch gekennzeichnet, daß die Detektionsvorrichtung wenigstens zwei Detektoren aufweist, die in einer zur Ebene (P) des Aufzeichnungsträgers (5) parallelen Ebene in einer zur Verschiebungsrichtung (X, X') des Aufzeichnungsträgers (5) parallelen Richtung angeordnet sind.

35. Vorrichtung zum optischen Lesen gemäß Anspruch 33, dadurch gekennzeichnet, daß die Detektionsvorrichtung außerdem zwei Detektoren aufweist, die in einer zur Verschiebungsrichtung (X, X') des Aufzeichnungsträgers parallelen Richtung angeordnet sind.

36. Vorrichtung zum optischen Lesen gemäß Anspruch 14, dadurch gekennzeichnet, daß der Aufzeichnungsträger eine optische Platte ist.

37. Vorrichtung zum optischen Lesen gemäß Anspruch 14, dadurch gekennzeichnet, daß der Strahlteiler ein ebenes Reflexionsmittel aufweist, das dem ersten Medium (23) zugehört.

# FIG_1

# FIG_2

# FIG_3

# FIG_4

# FIG_5

# FIG_6

# FIG_7

# FIG_8

FIG_9

FIG_10

FIG_11

FIG_12